# EUROPEAN PATENT APPLICATION

(11) **EP 4 840 640 A1**
(43) Date of publication of application: **18.11.2026**
(21) Application number: 26178282.5
(22) Date of filing: 12.05.2026
(51) Int. Cl.: B41J 2/21, B41J 29/393

(54) **TEST IMAGE FORMING METHOD AND INK-JET RECORDING APPARATUS**

(30) Priority: 16.05.2025 JP 2025082519
(71) Applicant: KYOCERA Document Solutions Inc., Osaka-shi, Osaka 540-8585 (JP)
(72) Inventor: Usui, Masato, Osaka-shi, 540-8585 (JP); Mori, Yukihiro, Osaka-shi, 540-8585 (JP); Nakatsuji, Hiroomi, Osaka-shi, 540-8585 (JP); Nakano, Issei, Osaka-shi, 540-8585 (JP); Yuasa, Yuzuru, Osaka-shi, 540-8585 (JP); Nakano, Jun, Osaka-shi, 540-8585 (JP)
(74) Representative: Plougmann Vingtoft a/s

(57) **Abstract**

An ink-jet head (41) includes a plurality of nozzles (411) disposed in different positions in a first direction and a common flow path (412) that is an ink flow path communicating with the plurality of nozzles, the plurality of nozzles and the common flow path being disposed side by side in a second direction intersecting with the first direction. The ink-jet head forms a test image on a sheet. The test image includes a plurality of line rows including a plurality of line images each formed of two or more pixels continuous in the second direction and arranged in the first direction. The plurality of line rows is formed to be adjacent to each other in the second direction and is formed such that two line rows adjacent to each other in the second direction each include one or more line images formed by different nozzles belonging to the same nozzle group (410).

## Description

### Background

The present disclosure relates to a test image forming method and an ink-jet recording apparatus.

The test image forming method is a method of forming on a sheet a test image including a plurality of line images by a plurality of nozzles communicating with a common flow path. The ink-jet recording apparatus implements the test image forming method.

The ink-jet recording apparatus ejects ink onto a sheet to form an image on the sheet. The ink-jet recording apparatus includes one or more ink-jet heads each including a plurality of nozzles that ejects ink.

The ink-jet recording apparatus performs a test printing process of forming a test image to be used for image quality evaluation onto the sheet in some cases. For example, the test image includes a plurality of line images each having a one-pixel width and extending in a sheet-transportation direction.

On the other hand, the ink-jet head may include a plurality of nozzle groups. Each of the plurality of nozzle groups includes a plurality of nozzles disposed at different positions in a main scanning direction, and a common flow path that is an ink flow path communicating with the plurality of nozzles.

In each of the plurality of nozzle groups, the plurality of nozzles is supplied with ink through the common flow path.

For example, in the test printing process, it is known to control the ink-jet head such that two line images arranged in the main scanning direction are not formed by two nozzles having a common ink supply channel.

### Summary

A test image forming method according to an aspect of the present disclosure includes forming a test image on a sheet by an ink-jet head, the ink-jet head including a plurality of nozzles disposed in different positions in a first direction and a common flow path that is an ink flow path communicating with the plurality of nozzles, the plurality of nozzles and the common flow path being disposed side by side in a second direction intersecting with the first direction, the sheet moving relative to the ink-jet head along the second direction. The test image includes a plurality of line rows including a plurality of line images each formed of two or more pixels continuous in the second direction and arranged in the first direction. The plurality of line rows is formed to be adjacent to each other in the second direction. When the plurality of nozzles communicating with the common flow path is assumed as a nozzle group, the plurality of line rows is formed such that two line rows adjacent to each other in the second direction in the plurality of line rows each include one or more of the line images, the line images being formed by different nozzles belonging to the same nozzle group.

An ink-jet recording apparatus according to another aspect of the present disclosure includes the ink-jet head that implements the test image forming method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### Brief Description of The Drawings

Fig. 1 is a view illustrating a configuration of an ink-jet recording apparatus according to an embodiment;
Fig. 2 is a view illustrating a configuration of an ink-jet head in the ink-jet recording apparatus according to the embodiment;
Fig. 3 is a schematic plan view of an ink ejecting portion of the ink-jet head in the ink-jet recording apparatus according to the embodiment;
Fig. 4 is a block diagram illustrating a configuration of a control apparatus in the ink-jet recording apparatus according to the embodiment;
Fig. 5 is a flowchart showing an example of a procedure of test print control in the ink-jet recording apparatus according to the embodiment;
Fig. 6 is a flowchart showing an example of a procedure of image-quality adjusting control in the ink-jet recording apparatus according to the embodiment;
Fig. 7 is a view illustrating a correspondence between a plurality of nozzles and a test image formed by the ink-jet recording apparatus according to the embodiment;
Fig. 8 is a flowchart showing an example of a procedure of test print control in an ink-jet recording apparatus according to a first modified example; and
Fig. 9 is a view illustrating a correspondence between a plurality of nozzles and a test image formed by the ink-jet recording apparatus according to the first modified example.

### Detailed Description

Hereinafter, an embodiment of the present disclosure will be described with reference to the drawings. Note that the following embodiment is an example embodying the present disclosure and is not intended to limit the technical scope of the present disclosure.

### Configuration of Ink-Jet Recording Apparatus 10

An ink-jet recording apparatus 10 according to an embodiment of the present disclosure forms an image on a sheet 9 by ink-jetting.

The ink-jet recording apparatus 10 includes a sheet accommodating portion 2, a sheet transportation apparatus 3, and a printing apparatus 4. The ink-jet recording apparatus 10 further includes a drying apparatus 5, an operation apparatus 801, a display apparatus 802, a control apparatus 8, and the like.

The sheet transportation apparatus 3 includes a sheet feeding mechanism 30, a plurality of transportation roller pairs 31, a first belt transportation apparatus 32, a second belt transportation apparatus 33, and a discharge roller pair 34.

The sheet feeding mechanism 30 feeds each sheet 9 in the sheet accommodating portion 2 to a first transportation path 301. The plurality of transportation roller pairs 31 transports the sheet 9 along the first transportation path 301 and further feeds the sheet 9 to the first belt transportation apparatus 32.

The first belt transportation apparatus 32 takes over the transportation of the sheet 9 from the plurality of transportation roller pairs 31 and feeds the sheet 9 to the second belt transportation apparatus 33. The first belt transportation apparatus 32 includes an annular transportation belt 320, a plurality of support rollers 321, and a suction apparatus 322.

The plurality of support rollers 321 supports the transportation belt 320 to be rotatable. A belt driving motor (not shown) rotates one of the plurality of support rollers 321, to thereby rotate the transportation belt 320.

The plurality of transportation roller pairs 31 transports the sheet 9 onto the upper surface of the transportation belt 320. The first belt transportation apparatus 32 transports the sheet 9 loaded onto the upper surface of the transportation belt 320 by the rotating transportation belt 320.

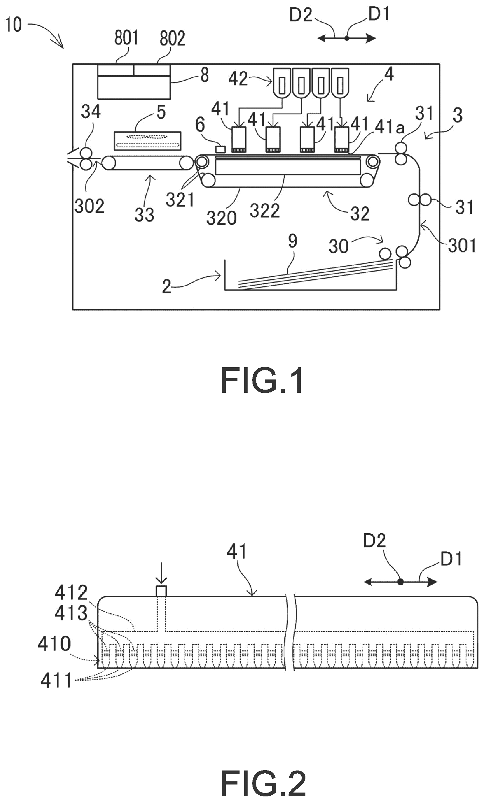

In Figs. 1, 2, 3, 7 and 9, a first direction D1 is a width direction of the sheet 9 transported by the first belt transportation apparatus 32. In addition, a second direction D2 is a direction intersecting with the first direction D1. In this embodiment, the second direction D2 is a width direction orthogonal to the first direction D1.

The first belt transportation apparatus 32 transports the sheet 9 along the second direction D2. By the rotation of the transportation belt 320, the upper surface of the transportation belt 320 moves along the second direction D2.

The suction apparatus 322 sucks in air to cause the sheet 9 to adhere to the upper surface of the transportation belt 320.

The second belt transportation apparatus 33 takes over the transportation of the sheet 9 from the first belt transportation apparatus 32 and further feeds the sheet 9 to a second transportation path 302.

The discharge roller pair 34 transports the sheet 9 along the second transportation path 302 and further feeds the sheet 9 from the second transportation path 302 to an output-side portion. For example, the output-side portion is a discharge tray or a post-process apparatus.

The printing apparatus 4 performs a printing process on the sheet 9 transported by the first belt transportation apparatus 32. The printing process is a process of forming an image on the sheet 9.

In this embodiment, the printing apparatus 4 performs the printing process by ink-jetting. In other words, the printing apparatus 4 forms an image on the sheet 9 by ejecting ink onto the sheet 9. The ink is an example of a developer.

The first direction D1 is a main scanning direction in the printing process, and the second direction D2 is a sub-scanning direction in the printing process. The printing apparatus 4 forms an image on the sheet 9 that moves on the first belt transportation apparatus 32 along the second direction D2.

Note that the movement of the sheet 9 on the first belt transportation apparatus 32 is an example of movement of the sheet 9 relative to a plurality of ink-jet heads 41 along the second direction D2.

The printing apparatus 4 includes the plurality of ink-jet heads 41 and a plurality of ink supply portions 42 corresponding to different colors of ink, respectively. Specifically, the printing apparatus 4 includes four ink-jet heads 41 and four ink supply portions 42 corresponding to yellow, magenta, cyan, and black, respectively.

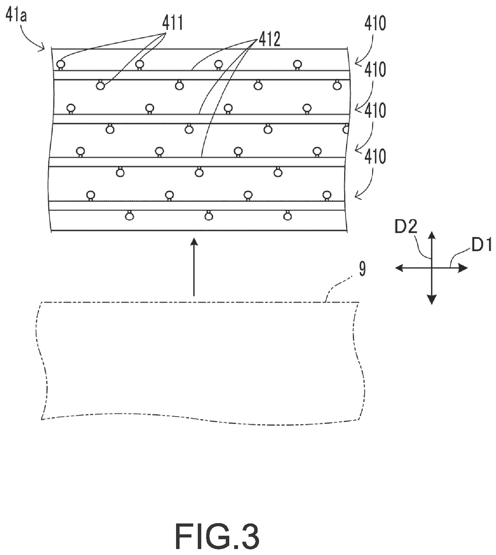

Each of the plurality of ink-jet heads 41 includes an ink ejecting portion 41a disposed to face the transportation belt 320 of the first belt transportation apparatus 32. The ink ejecting portion 41a includes a plurality of nozzles 411 that eject ink (see Figs. 2 and 3).

As shown in Fig. 3, the ink ejecting portion 41a of each ink-jet head 41 includes a plurality of nozzle groups 410 and a plurality of common flow paths 412 corresponding to the plurality of nozzle groups 410 (see Figs. 2 and 3). Each of the plurality of nozzle groups 410 includes a plurality of nozzles 411 disposed in different positions in the first direction D1. For example, in each of the plurality of nozzle groups 410, the plurality of nozzles 411 forms two nozzle rows arranged in the first direction D1 at different positions in the second direction D2 (see Fig. 3).

The plurality of common flow paths 412 are ink flow paths communicating with the plurality of nozzles 411 in the plurality of nozzle groups 410. In other words, in the ink ejecting portion 41a of each ink-jet head 41, each common flow path 412 is an ink flow path common to the plurality of nozzles 411 in each nozzle group 410.

In each of the plurality of nozzle groups 410, the plurality of nozzles 411 is supplied with ink through a corresponding one of the plurality of common flow paths 412.

Each of the ink-jet heads 41 includes a plurality of piezoelectric elements 413 corresponding to the plurality of nozzles 411 (see Fig. 2). Each piezoelectric element 413 vibrates by being supplied with an ejection drive signal by the control apparatus 8, to thereby apply pressure to ink and jet the ink drops from each nozzle 411.

In each of the nozzle groups 410, the plurality of nozzles 411 is disposed in different positions in the first direction D1. The plurality of nozzle groups 410 and the plurality of common flow paths 412 are disposed side by side in the second direction D2. In other words, sets of the nozzle group 410 and the common flow path 412 are disposed side by side in the second direction D2. For example, in each of the ink-jet heads 41, all the nozzles 411 in the plurality of nozzle groups 410 are disposed in different positions in the first direction D1.

The plurality of ink supply portions 42 stores different colors of ink therein, respectively, and supplies the ink to the plurality of ink-jet heads 41.

The drying apparatus 5 blows heated air to the sheet 9 transported by the second belt transportation apparatus 33, to thereby dry an ink image on the sheet 9.

The operation apparatus 801 detects a human operation. For example, the operation apparatus 801 includes a plurality of operation buttons and a touch panel. The display apparatus 802 can display various types of information. For example, the display apparatus 802 is a panel display apparatus such as a liquid crystal display panel.

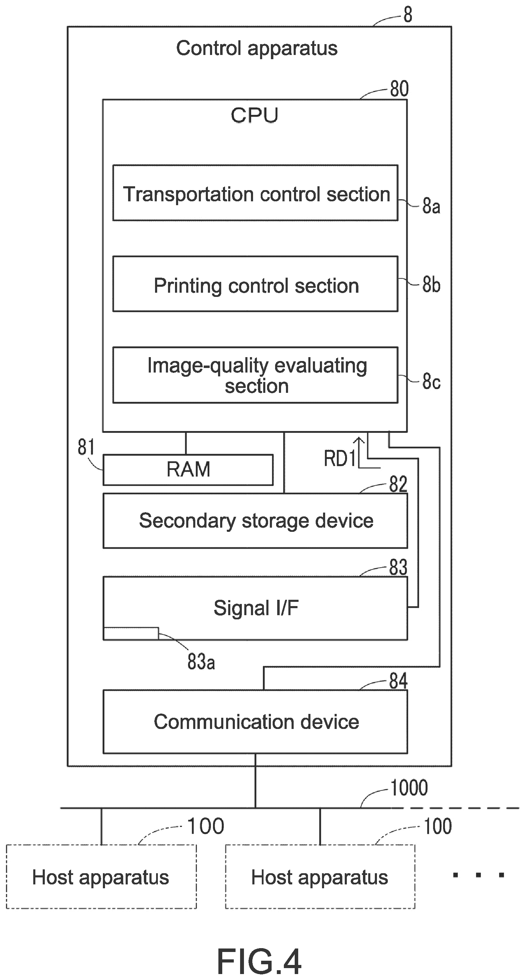

As shown in Fig. 4, the control apparatus 8 includes, for example, a central processing unit (CPU) 80, a random access memory (RAM) 81, a secondary storage device 82, a signal interface 83, and a communication device 84.

The CPU 80 executes a computer program to perform various types of control and data processes. The RAM 81 temporarily stores the computer program and various types of data executed by the CPU 80.

The secondary storage device 82 is a computer-readable, nonvolatile storage device. The secondary storage device 82 stores the computer program and various types of data executed by the CPU 80. For example, one or both of a flash memory and a hard disk drive are adopted as the secondary storage device 82.

The signal interface 83 converts detection signals of various sensors into digital detection data and transmits the detection data to the CPU 80. The signal interface 83 further converts a control command that is output from the CPU 80 into a control signal and transmits the control signal to a device to be controlled.

The communication device 84 performs communication with an external apparatus such as a host apparatus 100 via a network 1000. The CPU 80 performs communication with an external apparatus through the communication device 84. The host apparatus 100 is an information processing apparatus that requests the ink-jet recording apparatus 10 to perform the printing process described above.

The CPU 80 includes a plurality of processing modules implemented by executing the computer program. The plurality of processing modules includes, for example, a transportation control section 8a and a printing control section 8b (refer to Fig. 4).

The transportation control section 8a controls the sheet transportation apparatus 3 to control transportation of the sheet 9. The printing control section 8b causes the printing apparatus 4 to perform the printing process in synchronization with the transportation of the sheet 9. Further, the printing control section 8b causes the drying apparatus 5 to operate when the printing process is performed.

Note that a portion or all of the processes executed by the CPU 80 may be executed by, for example, a digital signal processor (DSP) or a system on a chip (SoC). Each of the CPU 80, the DSP, and the SoC is an example of the processor.

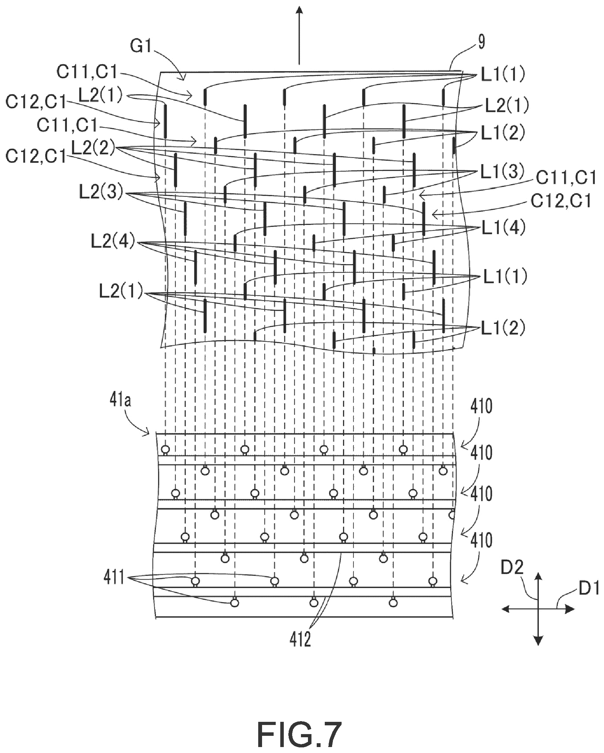

As will be described later, the printing control section 8b causes each of the ink-jet heads 41 to perform a test printing process of forming a test image G1 for image quality evaluation on the sheet 9 (see Fig. 7). In this embodiment, the test image G1 includes a plurality of line images L1 and L2 each having a one-pixel width and extending in the second direction D2.

The ink-jet recording apparatus 10 includes a line sensor unit 6 that reads the test image G1 formed on the sheet 9 (see Fig. 1). The line sensor unit 6 is disposed to face the first belt transportation apparatus 32 on the downstream side of the plurality of ink-jet heads 41 in a sheet-transportation direction. The line sensor unit 6 is disposed along the first direction D1.

Further, the signal interface 83 includes an analog front end (AFE) 83a that converts a signal of the read image, which is obtained by the line sensor unit 6, into digital data (see Fig. 4).

The AFE 83a transmits read image data RD1, which is the read image, to the CPU 80 (see Fig. 4). The line sensor unit 6 and the AFE 83a are examples of an image reading apparatus that reads the test image G1 formed on the sheet 9.

In addition, the plurality of processing modules in the CPU 80 includes an image-quality evaluating section 8c that evaluates the image quality of the test image G1 by processing the read image data RD1 (see Fig. 4). The CPU 80 including the image-quality evaluating section 8c is an example of an evaluating apparatus that evaluates the image quality of the test image G1 on the basis of the read image of the test image G1 obtained by the image reading apparatus.

By the way, in each of the plurality of nozzle groups 410, a first nozzle and a second nozzle, which are part of the plurality of nozzles 411, may eject ink continuously. In this case, ink flow interference may occur between the first nozzle and the second nozzle, and this interference may adversely affect an output image.

In the ink-jet recording apparatus 10, when the printing control section 8b causes each ink-jet head 41 to perform the test printing process so as not to cause the interference, an image that is not affected by the interference is formed on the sheet 9.

On the other hand, when a print job to form various images, which are not test images G1, on a sheet 9 is performed, it is difficult to control each ink-jet head 41 so as not to cause the interference.

Therefore, in order to suitably evaluate the image quality of an output image when the print job is executed, it is desirable that a test image G1 reflecting the effects of the interference is formed on the sheet 9 in the test printing process.

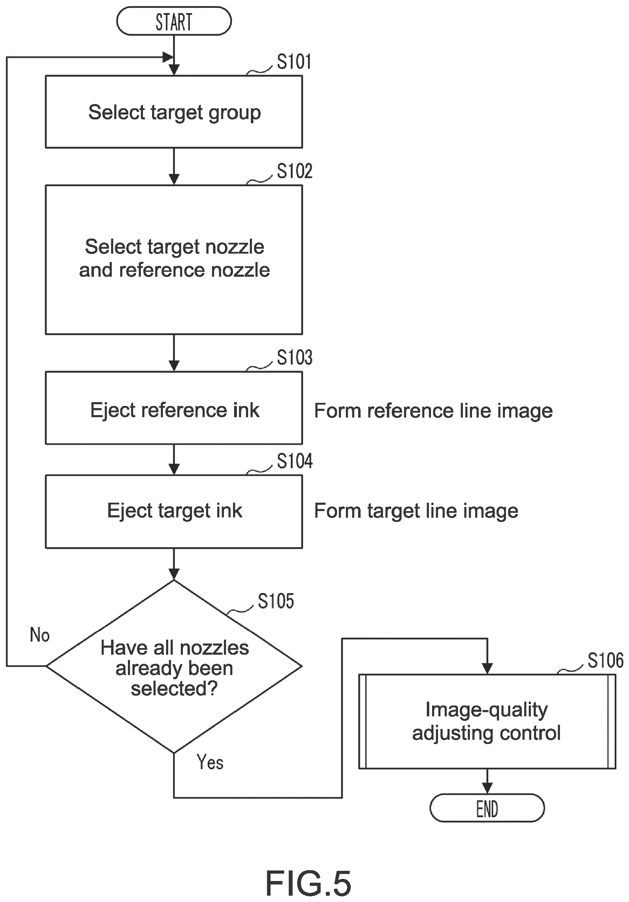

The printing control section 8b performs test print control to be described later (see Fig. 5). The test print control includes a process for forming on a sheet 9 a test image G1 reflecting the effects of the above-mentioned interference in each of the plurality of nozzle groups 410.

The printing control section 8b starts the test print control when a predetermined test start operation is detected by the operation apparatus 801. The printing control section 8b causes the ink-jet recording apparatus 10 to perform a process of forming a test image G1 for image quality evaluation on a sheet 9 in the test print control. The test print control is an example of a process of implementing an ink-jet control method, which causes the ink-jet head10 to perform a process of forming a test image G1 on a sheet 9.

### Test Print Control

An example of a procedure of the test print control will be described below with reference to the flowchart shown in Fig. 5.

In the following description, S101, S102, ... represent identification symbols of a plurality of steps in the test print control. In the test print control, a process in Step S101 is performed first.

### <Step S101>

In Step S101, the printing control section 8b selects a target group from a plurality of nozzle groups 410 of each ink-jet head 41.

After performing the process in Step S101, the printing control section 8b moves the process to Step S102.

### <Step S102>

In Step S102, the printing control section 8b selects one or more reference nozzles and a plurality of target nozzles different from the reference nozzles from a plurality of nozzles 411 in the target group.

After performing the process in Step S102, the printing control section 8b moves the process to Step S103.

### <Step S103>

In Step S103, the printing control section 8b causes each of the ink-jet heads 41 to perform a reference ink ejecting process.

The reference ink ejecting process is a process of continuously ejecting ink to two or more pixels by using the reference nozzles to form one or more reference line images L1 on the sheet 9 (see Fig. 7). The reference line image L1 is an image continuous in two or more pixels in the second direction D2.

Fig. 7 illustrates an example in which the plurality of reference line images L1 is formed in parallel on a sheet 9 in a situation in which the plurality of reference nozzles is selected in the target group. In this case, the plurality of reference line images L1 is a plurality of line images arranged in parallel in the first direction D1.

In Fig. 7, each of the bracketed additional numbers in L1(1), L1(2), ... is an identification number of the target group corresponding to each of the reference line images L1.

The printing control section 8b performs a process in Step S104, following the process in Step S103.

### <Step S104>

In Step S104, the printing control section 8b causes each of the ink-jet heads 41 to perform a target ink ejecting process, following the reference ink ejecting process in Step S103.

The target ink ejecting process is a process of continuously ejecting ink to two or more pixels by using each of the plurality of target nozzles to form on the sheet 9 a plurality of target line images L2 continuous in two or more pixels in the second direction D2 (see Fig. 7). The plurality of target line images L2 is a plurality of line images each having a one-pixel width and extending in the second direction D2.

The target ink ejecting process is executed, so that a plurality of target line images L2 is formed in parallel on the sheet 9 by the plurality of target nozzles of the target group. The plurality of target line images L2 is a plurality of line images arranged in parallel in the first direction D1.

In Fig. 7, each of the bracketed additional numbers in L2(1), L2(2), ... is an identification number of the target group corresponding to each of the target line images L2.

For convenience purposes, in Fig. 7, each reference line image L1 is shorter than each target line image L2. However, each reference line image L1 may have the same length as each target line image L2.

After performing the process in Step S104, the printing control section 8b moves the process to Step S105.

### <Step S105>

In Step S105, the printing control section 8b selects the next process according to whether or not all nozzles 411 in all nozzle groups 410 of each ink-jet head 41 have already been selected as any of the plurality of target nozzles.

If some of all nozzles 411 have not yet been selected as any of the plurality of target nozzles, the printing control section 8b moves the process to Step S101. Thus, the processes in S102 and subsequent steps are performed for a plurality of new target nozzles and one or more new reference nozzles in a new target group.

On the other hand, if all nozzles 411 in all nozzle groups 410 have already been selected as any of the plurality of target nozzles, the printing control section 8b moves the process to Step S106.

### <Step S106>

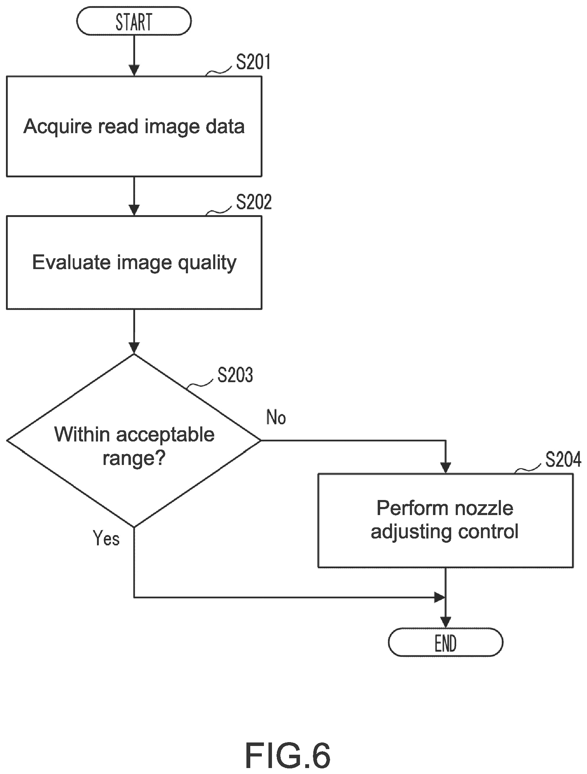

In Step S106, the printing control section 8b and the image-quality evaluating section 8c perform image-quality adjusting control to be described later (see Fig. 6).

After performing the process in Step S106, the printing control section 8b terminates the test print control.

As described above, the printing control section 8b sequentially selects one or more reference nozzles and a plurality of target nozzles, which belong to the same group, for each of the plurality of nozzle groups 410 of each ink-jet head 41 (see Steps S101 and S102).

Each time one or more reference nozzles are selected, the printing control section 8b causes each ink-jet head 41 to perform the reference ink ejecting process of forming one or more reference line images L1 on a sheet 9 (see Step S103).

In other words, for each of the plurality of nozzle groups 410, one or more reference nozzles perform the reference ink ejecting process to form one or more reference line images L1 on the sheet 9 (see Steps S101 to S103).

The reference ink ejecting process is an example of a first continuous ejecting process of continuously ejecting ink to two or more pixels. One or more reference nozzles is an example of one or more first nozzles. One or more reference line images L1 is an example of one or more first line images.

Further, the printing control section 8b causes each ink-jet head 41 to perform the target ink ejecting process of forming a plurality of target line images L2 on the sheet 9, following the reference ink ejecting process (see Step S104).

The fact that the target ink ejecting process is performed following the reference ink ejecting process means that ink ejection to the last pixel in the reference ink ejecting process and ink ejection to the first pixel in the target ink ejecting process are continuously performed.

In other words, in Step S103 and Step S104, immediately after one or more reference nozzles continuously eject ink to two or more pixels, the plurality of target nozzles belonging to the same group as the reference nozzles continuously ejects ink to two or more pixels.

In other words, for each of the plurality of nozzle groups 410, each of the plurality of target nozzles performs the target ink ejecting process, following the reference ink ejecting process. Thus, the plurality of target nozzles forms a plurality of target line images L2 on the sheet 9.

The target ink ejecting process is an example of a second continuous ejecting process of continuously ejecting ink to two or more pixels. The plurality of target nozzles is an example of a plurality of second nozzles. The plurality of target line images L2 is an example of a plurality of second line images.

Each ink-jet head 41 in the test print control is an example of an apparatus that implements a test image forming method of forming on a sheet 9 a test image G1 including a plurality of line images L1 and L2.

The test image G1 formed by the test print control includes a plurality of line rows C1 including a plurality of line images L1 and L2 arranged in the first direction D1 (see Fig. 7). The plurality of line images L1 and L2 is each formed of two or more pixels continuous in the second direction D2. The plurality of line rows C1 includes a first line row C11 formed by the reference ink ejecting process and a second line row C11 formed by the target ink ejecting process (see Fig. 7).

The plurality of line rows C1 is formed in offset positions in the second direction D2 such that the positions in the second direction D2 are continuous (see Fig. 7). In other words, the plurality of line rows C1 is adjacent to each other in the second direction D2. The plurality of line rows C1 is formed such that two rows adjacent to each other in the second direction D2 in the plurality of line rows C1 each include one or more line images L1 or L2, the one or more line images L1 or L2 being formed by different nozzles 411 belonging to the same nozzle group 410. The two rows adjacent to each other are the first line row C11 and the second line row C11.

Therefore, the plurality of target nozzles ejects ink while being affected by the interference with ink ejection of the reference nozzles. As a result, each of the plurality of target line images L2 in the test image G1 is an image reflecting the effects of the interference in each of the plurality of nozzle groups 410.

The image quality is evaluated on the basis of the plurality of target line images L2 in the test image G1, so that the image quality of an output image when the print job is executed can be suitably evaluated.

Note that in this embodiment the printing control section 8b causes each of the nozzle groups 410 to perform the reference ink ejecting process by using newly selected reference nozzles, following the target ink ejecting process performed immediately before the reference ink ejecting process.

### Image-Quality Adjusting Control

Next, an example of a procedure of the image-quality adjusting control will be described with reference to the flowchart shown in Fig. 6.

In the following description, S201, S202, ... represent identification symbols of a plurality of steps in the image-quality adjusting control. In the image-quality adjusting control, a process in Step S201 is performed first.

### <Step S201>

In Step S201, the image-quality evaluating section 8c acquires the read image data RD1, which is the read image of the test image G1, from the AFE 83a.

After performing the process in Step S201, the image-quality evaluating section 8c moves the process to Step S202.

### <Step S202>

In Step S202, the image-quality evaluating section 8c evaluates the image quality of the test image G1 on the basis of the read image data RD1.

For example, the image-quality evaluating section 8c extracts a plurality of pieces of target line data, which are data of the plurality of target line images L2, from the read image data RD1, and identifies the number of missing pixels in the plurality of pieces of target line data.

The number of missing pixels is the number of missing pixels in each of the plurality of target line images L2. The image quality of the test image G1 becomes better when the number of missing pixels becomes smaller.

After performing the process in Step S202, the image-quality evaluating section 8c moves the process to Step S203.

### <Step S203>

In Step S203, the image-quality evaluating section 8c selects the next process according to whether or not an evaluation result of the image quality of the test image G1 obtained in Step S202 falls within an acceptable range.

If the evaluation result of the image quality of the test image G1 falls within the acceptable range, the image-quality evaluating section 8c terminates the image-quality adjusting control.

On the other hand, if the evaluation result of the image quality of the test image G1 is out of the acceptable range, the image-quality evaluating section 8c moves the process to Step S204.

In the following description, in the plurality of ink-jet heads 41, an ink-jet head in which the evaluation result of the image quality of the test image G1 is out of the acceptable range is referred to as a defective ink-jet head. In addition, in the plurality of nozzles 411 of each ink-jet head 41, a nozzle corresponding to an image whose evaluation result of the image quality is out of the acceptable range is referred to as a defective nozzle.

### <Step S204>

In Step S204, the printing control section 8b performs nozzle adjusting control.

For example, the nozzle adjusting control performs nozzle cleaning control for the defective ink-jet head.

For example, the nozzle cleaning control is a process of causing the defective ink-jet head to perform ink meniscus vibration.

In addition, if the ink-jet recording apparatus 10 includes an ink purge apparatus (not shown), the nozzle cleaning control is a process of causing the ink purge apparatus to operate.

For example, the ink purge apparatus includes a nozzle cap and a suction apparatus. The nozzle cap covers the ink ejecting portions 41a of the respective ink-jet heads 41. The suction apparatus sucks in air within the nozzle cap.

When the ink purge apparatus operates, ink within the plurality of nozzles 411 is expelled into the nozzle cap and new ink is supplied into the plurality of nozzles 411 from any of the plurality of ink supply portions 42.

In addition, the nozzle adjusting control may be a complementary nozzle setting process. The complementary nozzle setting process is a process of setting an adjacent nozzle, which is adjacent to the defective nozzle in the plurality of nozzles 411, as a complementary nozzle.

When causing the defective ink-jet head to eject ink by using the defective nozzle in the print job, the printing control section 8b also causes the complementary nozzle to eject ink.

After performing the process in Step S204, the printing control section 8b terminates the image-quality adjusting control.

Note that the test image G1 may be evaluated by human visual evaluation.

### First Modified Example

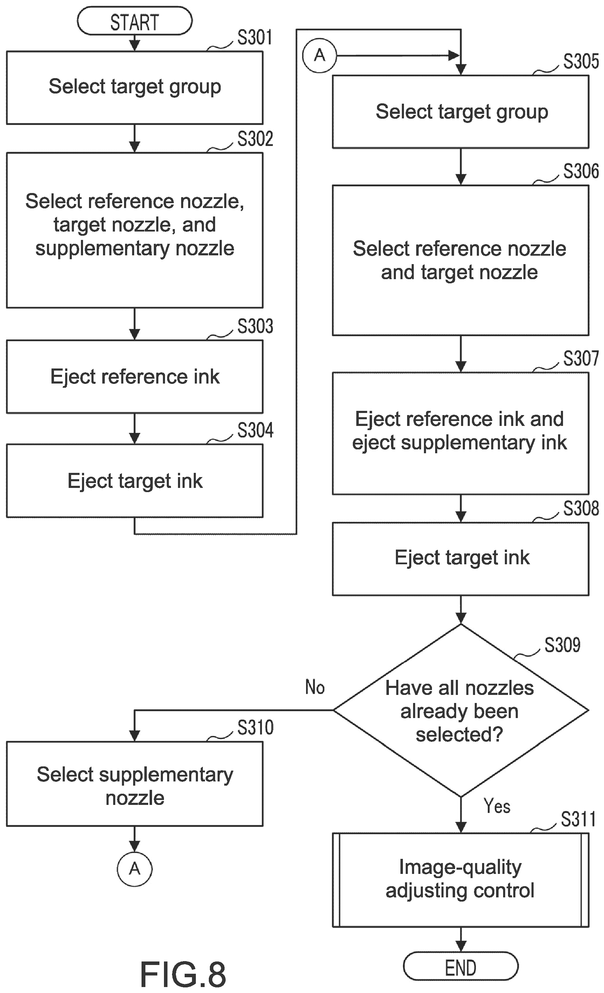

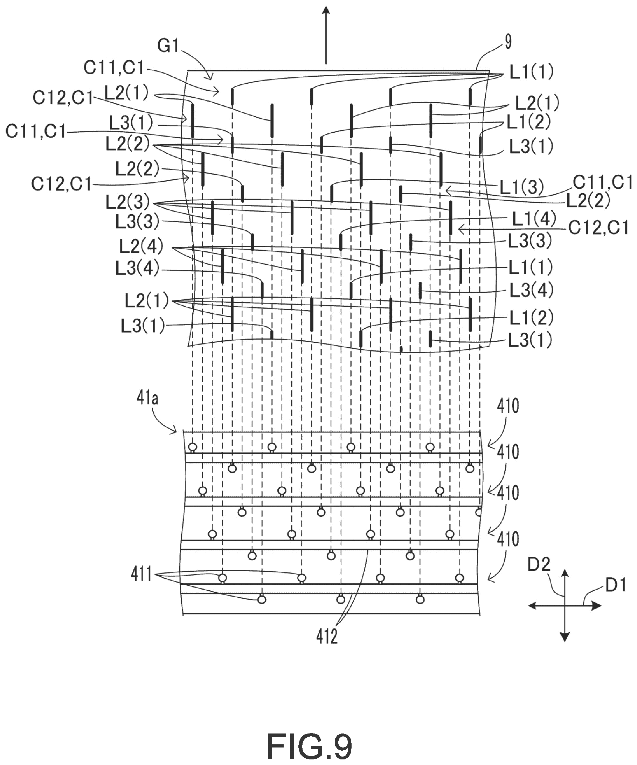

Next, a first modified example of the ink-jet recording apparatus 10 will be described with reference to Figs. 8 and 9.

### Test Print Control

A procedure of a modified example of the test print control will be described below with reference to the flowchart shown Fig. 8.

In the following description, S301, S302, ... represent identification symbols of a plurality of steps in a modified example of the test print control. In the modified example of the test print control, a process in Step S301 is performed first.

### <Step S301>

In Step S301, the printing control section 8b selects a target group from a plurality of nozzle groups 410 of each ink-jet head 41.

After performing the process in Step S301, the printing control section 8b moves the process to Step S302.

### <Step S302>

In Step S302, the printing control section 8b selects one or more reference nozzles, a plurality of target nozzles, and one or more supplementary nozzles from a plurality of nozzles 411 in the target group.

The plurality of target nozzles is different from the reference nozzles. The supplementary nozzles are different from the plurality of target nozzles. Note that the supplementary nozzles may be the same as or different from the reference nozzles.

After performing the process in Step S302, the printing control section 8b moves the process to Step S303.

### <Step S303>

In Step S303, the printing control section 8b causes each of the ink-jet heads 41 to perform the reference ink ejecting process.

The process in Step S303 is executed, so that one or more first reference line images L1 are formed on a sheet 9 (see Fig. 9). The reference line images L1 are line images each having a one-pixel width and extending in the second direction D2.

Fig. 9 illustrates an example in which the plurality of reference line images L1 is formed in parallel on the sheet 9 in a situation in which the plurality of reference nozzles is selected in the target group. In this case, the plurality of reference line images L1 is a plurality of line images arranged in parallel in the first direction D1.

In Fig. 9, each of the bracketed additional numbers in L1(1), L1(2), ... is an identification number of the target group corresponding to each of the reference line images L1.

The printing control section 8b performs a process in Step S304, following the process in Step S303.

### <Step S304>

In Step S304, the printing control section 8b causes each of the ink-jet heads 41 to perform the target ink ejecting process, following the reference ink ejecting process in Step S303.

The process in Step S304 is executed, so that a plurality of first target line images L2 is formed on the sheet 9 (see Fig. 9). Each of the target line images L2 is a line image having a one-pixel width and extending in the second direction D2. The plurality of target line images L2 is a plurality of line images arranged in parallel in the first direction D1.

In Fig. 9, each of the bracketed additional numbers in L2(1), L2(2), ... is an identification number of the target group corresponding to each of the target line images L2.

For convenience purposes, in Fig. 9, each reference line image L1 is shorter than each target line image L2. However, each reference line image L1 may have the same length as each target line image L2.

After performing the process in Step S304, the printing control section 8b moves the process to Step S305.

### <Step S305>

In Step S305, the printing control section 8b selects a new target group from a plurality of nozzle groups 410 of each ink-jet head 41, as in Step S301.

After performing the process in Step S305, the printing control section 8b moves the process to Step S306.

### <Step S306>

In Step S306, the printing control section 8b selects one or more reference nozzles and a plurality of target nozzles different from the reference nozzles from a plurality of nozzles 411 in the target group.

After performing the process in Step S306, the printing control section 8b moves the process to Step S307.

### <Step S307>

In Step S307, the printing control section 8b causes each ink-jet head 41 to perform the reference ink ejecting process and a supplementary ink ejecting process in parallel, following the target ink ejecting process performed at the last minute.

The supplementary ink ejecting process is a process of forming one or more supplementary line images L3 on the sheet 9 by continuously ejecting ink to two or more pixels by using the supplementary nozzles belonging to the same group as the plurality of target nozzles used in the target ink ejecting process performed at the last minute.

The reference ink ejecting process in Step S307 is the reference ink ejecting process by the reference nozzles newly selected in Step S306.

The supplementary ink ejecting process is performed in parallel with the reference ink ejecting process. Thus, the supplementary line images L3 are formed side by side with the reference line images L1 in the first direction D1 (see Fig. 9).

The target ink ejecting process performed at the last minute is the target ink ejecting process in Step S304 or a target ink ejecting process in Step S308 to be described later. In addition, the reference ink ejecting process in Step S307 is the reference ink ejecting process performed subsequently to the target ink ejecting process by the reference nozzles newly selected in Step S306.

In other words, the printing control section 8b causes each ink-jet head 41 to perform the supplementary ink ejecting process, following the target ink ejecting process and in parallel with the reference ink ejecting process performed subsequently to the target ink ejecting process by the reference nozzle newly selected.

In Fig. 9, each of the bracketed additional numbers in L3(1), L3(2), ... is an identification number of the target group corresponding to each of the supplementary line images L3.

The process in Step S307 is executed, so that one or more second and subsequent reference line images L1 and one or more first and subsequent supplementary line images L3 are formed on the sheet 9 (see Fig. 9). Each of the reference line images L1 and the supplementary line images L3 is a line image having a one-pixel width and extending in the second direction D2.

Fig. 9 illustrates an example in which the process in Step S307 is performed in a situation in which a plurality of supplementary nozzles is selected in the last target group, and a plurality of reference nozzles is selected in a new target group. In this case, the plurality of supplementary line images L3 and the plurality of reference line images L1 are a plurality of line images arranged in parallel in the first direction D1.

The printing control section 8b performs a process in Step S308, following the process in Step S307.

### <Step S308>

In Step S308, the printing control section 8b causes each ink-jet head 41 to perform the target ink ejecting process, following the reference ink ejecting process and the supplementary ink ejecting process in Step S307.

The target ink ejecting process in Step S308 is the target ink ejecting process by the plurality of target nozzles newly selected in Step S306.

The process in Step S308 is executed, so that a plurality of second and subsequent target line images L2 is formed on the sheet 9 (see Fig. 9).

For convenience purposes, in Fig. 9, each reference line image L1 and each supplementary line image L3 are shorter than each target line image L2. However, each reference line image L1 and each supplementary line image L3 may have the same length as each target line image L2.

After performing the process in Step S308, the printing control section 8b moves the process to Step S309.

### <Step S309>

In Step S309, the printing control section 8b selects the next process according to whether or not all nozzles 411 in the target group of each ink-jet head 41 have already been selected as any of the plurality of target nozzles and the supplementary nozzles.

If some of all nozzles 411 have not yet been selected as any of the plurality of target nozzles and the supplementary nozzles, the printing control section 8b moves the process to Step S310.

On the other hand, if all nozzles 411 in all nozzle groups 410 have already been selected as any of the plurality of target nozzles and the supplementary nozzles, the printing control section 8b moves the process to Step S311.

### <Step S310>

In Step S310, the printing control section 8b selects one or more new supplementary nozzles in the same group as the reference nozzles and the plurality of target nozzles selected in Step S306.

As described above, the supplementary nozzles are different from the plurality of target nozzles selected in Step S306.

After performing the process in Step S310, the printing control section 8b moves the process to Step S305. Thus, the processes in Step S305 and subsequent steps are performed for a plurality of new target nozzles and one or more new reference nozzles in a new target group.

### <Step S311>

On the other hand, in Step S311, the printing control section 8b and the image-quality evaluating section 8c perform the image-quality adjusting control (see Fig. 6).

After performing the process in Step S311, the printing control section 8b terminates the test print control.

The image-quality evaluating section 8c in this modified example extracts, in Step S202 of the image-quality adjusting control, a plurality of pieces of target line data and supplementary line data that is data of the supplementary line images L3, from the read image data RD1 (see Fig. 6). Further, the image-quality evaluating section 8c specifies the number of missing pixels in the plurality of pieces of target line data and the supplementary line data.

As described above, the printing control section 8b sequentially selects one or more reference nozzles, a plurality of target nozzles, and one or more supplementary nozzles, which belong to the same group, for each of the plurality of nozzle groups 410 of each ink-jet head 41 (see Steps S302, S306, and S310).

Each time one or more reference nozzles are selected, the printing control section 8b causes each ink-jet head 41 to perform the reference ink ejecting process of forming one or more reference line images L1 on the sheet 9 (see Steps S303 and S307).

Further, the printing control section 8b causes each ink-jet head 41 to perform the target ink ejecting process of forming a plurality of target line images L2 on the sheet 9, following the reference ink ejecting process (see Steps S304 and S308).

Furthermore, the printing control section 8b causes each ink-jet head 41 to perform the supplementary ink ejecting process, following the target ink ejecting process in Step S304 or Step S308 and in parallel with the reference ink ejecting process in Step S307 (see Step S307).

The target ink ejecting process in Steps S304 or S308 is the target ink ejecting process performed immediately before the reference ink ejecting process and the supplementary ink ejecting process in Step S307.

The reference ink ejecting process in Step S307 is the reference ink ejecting process by the reference nozzles newly selected in Step S306.

The supplementary ink ejecting process in Step S307 is a process using one or more supplementary nozzles belonging to the same group as the plurality of target nozzles used in the target ink ejecting process performed at the last minute. The supplementary ink ejecting process in Step S307 is a process of forming on the sheet 9 one or more supplementary line images L3 arranged in the first direction D1 with respect to the reference line images L1 by continuously ejecting ink to two or more pixels by the supplementary nozzles.

In Steps S303 to S304 or Steps S307 to S308, immediately after one or more reference nozzles continuously eject ink to two or more pixels, the plurality of target nozzles belonging to the same group as the reference nozzles continuously ejects ink to two or more pixels.

In other words, for each of the plurality of nozzle groups 410, one or more supplementary nozzles perform the supplementary ink ejecting process, following the target ink ejecting process performed at the last minute and the reference ink ejecting process performed subsequently to the target ink ejecting process performed at the last minute. The supplementary nozzles belong to the same group as the plurality of target nozzles that performs the target ink ejecting process performed at the last minute, and are different from the plurality of target nozzles.

The supplementary nozzles perform the supplementary ink ejecting process, to thereby form, on the sheet 9, one or more supplementary line images L3, each of which is continuous in two or more pixels in the second direction D2.

The supplementary ink ejecting process is an example of a third continuous ejecting process of continuously ejecting ink to two or more pixels. The reference ink ejecting process and the target ink ejecting process are examples of the first continuous ejecting process and the second continuous ejecting process, respectively.

One or more supplementary nozzles is an example of one or more third nozzles different from the plurality of the second nozzles. One or more supplementary line images L3 is an example of one or more third line images.

In this modified example as well, a plurality of line rows C1 is formed in offset positions in the second direction D2 such that the positions in the second direction D2 are continuous (see Fig. 9). The plurality of line rows C1 in this modified example includes a first line row C11 formed by the reference ink ejecting process and the supplementary ink ejecting process and a second line row C11 formed by the target ink ejecting process (see Fig. 9).

In this modified example as well, the plurality of line rows C1 is formed such that two rows adjacent to each other in the second direction D2 in the plurality of line rows C1 each include one or more line images L1 or L2, the one or more line images L1 or L2 being formed by different nozzles 411 belonging to the same nozzle group 410.

Therefore, the plurality of target nozzles ejects ink while being affected by the interference with ink ejection of the reference nozzles. As a result, each of the plurality of target line images L2 in the test image G1 is an image reflecting the effects of the interference in each of the plurality of nozzle groups 410.

Further, in Step S308 and in Step S307 performed after Step S308, immediately after the plurality of target nozzles continuously ejects ink to two or more pixels, the supplementary nozzles belonging to the same group as the plurality of target nozzles continuously eject ink to two or more pixels.

Therefore, the supplementary nozzles eject ink while being affected by the interference with ink ejection of the plurality of target nozzles. As a result, each of the supplementary line images L3 in the test image G1 is an image reflecting the effects of the interference in each of the plurality of nozzle groups 410, similarly to the plurality of target line images L2.

The image quality is evaluated on the basis of the plurality of target line images L2 or supplementary line images L3 in the test image G1, so that the image quality of an output image when the print job is executed can be suitably evaluated.

### Second Modified Example

Next, a second modified example of the ink-jet recording apparatus 10 will be described.

In this modified example, the ink-jet recording apparatus 10 includes a scanner unit that reads an image of a document, instead of the line sensor unit 6. In this case, the scanner unit processes a sheet 9, on which a test image G1 has been formed, as the document.

In other words, the scanner unit reads the test image G1 formed on the sheet 9 and outputs read image data RD1. The scanner unit is an example of an image reading apparatus.

The image-quality evaluating section 8c performs the processes in Step S201 and Step S202 in the image-quality evaluating control on the basis of the read image data RD1 obtained by the scanner unit (see Fig. 6).

### Third Modified Example

Next, a third modified example of the ink-jet recording apparatus 10 will be described.

In this modified example, the ink-jet recording apparatus 10 includes a head moving apparatus that moves the plurality of ink-jet heads 41 along the second direction D2.

In this modified example, the plurality of ink-jet heads 41 forms an image on a stationary sheet 9 while moving along the second direction D2. The movement of the plurality of ink-jet heads 41 is an example of movement of the sheet 9 relative to the plurality of ink-jet heads 41 along the second direction D2.

It is to be understood that the embodiments herein are illustrative and not restrictive, since the scope of the disclosure is defined by the appended claims.

## Claims

1. A test image forming method, comprising
forming a test image on a sheet by an ink-jet head (41), the ink-jet head (41) including a plurality of nozzles (411) disposed in different positions in a first direction and a common flow path (412) that is an ink flow path communicating with the plurality of nozzles (411), the plurality of nozzles (411) and the common flow path (412) being disposed side by side in a second direction intersecting with the first direction, the sheet moving relative to the ink-jet head (41) along the second direction, wherein
the test image includes a plurality of line rows including a plurality of line images each formed of two or more pixels continuous in the second direction and arranged in the first direction,
the plurality of line rows is formed to be adjacent to each other in the second direction, and
when the plurality of nozzles (411) communicating with the common flow path (412) is assumed as a nozzle group (410), the plurality of line rows is formed such that two line rows adjacent to each other in the second direction in the plurality of line rows each include one or more of the line images, the line images being formed by different nozzles belonging to the same nozzle group (410).

2. An ink-jet recording apparatus (10), comprising
an ink-jet head (41) including a plurality of nozzles (411) disposed in different positions in a first direction and a common flow path (412) that is an ink flow path communicating with the plurality of nozzles (411), the plurality of nozzles (411) and the common flow path (412) being disposed side by side in a second direction intersecting with the first direction, wherein
the test image forming method according to claim 1 is implemented by the ink-jet head (41).

3. The ink-jet recording apparatus (10) according to claim 2, further comprising:
an image reading apparatus (6) that reads a test image formed on a sheet; and
an evaluating apparatus (80) that evaluates an image quality of the test image on a basis of a read image of the test image, the read image being obtained by the image reading apparatus (6).
